# EUROPEAN PATENT APPLICATION

(11) **EP 4 319 186 A1**
(43) Date of publication of application: **07.02.2024**
(21) Application number: 22794586.2
(22) Date of filing: 12.04.2022
(51) Int. Cl.: H04Q 11/00

(54) **ELECTRICAL SWITCHING CLUSTER SYSTEM**

(30) Priority: 29.04.2021 CN 202110475803
(71) Applicant: Huawei Technologies Co., Ltd., Longgang Shenzhen, Guangdong 518129 (CN)
(72) Inventor: XIANG, Hui, Shenzhen, Guangdong 518129 (CN); XIAO, Xinhua, Shenzhen, Guangdong 518129 (CN); ZHANG, Chunhui, Shenzhen, Guangdong 518129 (CN)
(74) Representative: Körber, Martin Hans
(86) International application number: PCT/CN2022/086385
(87) International publication number: WO 2022/228115

(57) **Abstract**

This application discloses an electrical switching cluster system, and relates to the communication field, to reduce a transmission delay of the electrical switching cluster system. The electrical switching cluster system includes a plurality of input nodes, a plurality of intermediate nodes, and a plurality of output nodes. The input node includes a first electrical switching module and a plurality of colored optics sending modules, the first electrical switching module performs electrical switching on a plurality of electrical signals to obtain a plurality of groups of first electrical signals, and the colored optics sending module converts one group of first electrical signals into a multi-wavelength first optical signal. The intermediate node demultiplexes a plurality of first optical signals to obtain a plurality of groups of second optical signals, and multiplexes optical signals of different wavelengths in the plurality of groups of second optical signals to obtain a plurality of multi-wavelength third optical signals. The output node includes a second electrical switching module and a plurality of colored optics receiving modules, the colored optics receiving module converts one third optical signal into one group of second electrical signals, and the second electrical switching module performs electrical switching on a plurality of groups of second electrical signals to output the plurality of groups of second electrical signals through any output port.

## Description

This application claims priority to Chinese Patent Application No. 202110475803.2, filed with the China National Intellectual Property Administration on April 29, 2021 and entitled "ELECTRICAL SWITCHING CLUSTER SYSTEM", which is incorporated herein by reference in its entirety.

### TECHNICAL FIELD

This application relates to the communication field, and in particular, to an electrical switching cluster system.

### BACKGROUND

With increasing network bandwidth, a capacity and a quantity of ports of a single electrical switch are very limited. One manner is to connect small-capacity electrical switches through a specific network topology, to form a large-capacity electrical switching (or referred to as electrical cross-connection) cluster system, thereby implementing large-capacity electrical switching.

A common electrical switching cluster system adopts a three-level Clos (Clos) architecture, and includes a plurality of input nodes, a plurality of intermediate nodes, and a plurality of output nodes. Optical signals are transmitted between the plurality of input nodes and the plurality of intermediate nodes through optical fibers, and optical signals are transmitted between the plurality of intermediate nodes and the plurality of output nodes through optical fibers. Each node is an electrical switch, and the optical signal is converted into an electrical signal inside the electrical switch and then the electrical signal is exchanged. The all-electrical switching manner causes a large transmission delay of the entire system.

### SUMMARY

Embodiments of this application provide an electrical switching cluster system, to reduce a transmission delay of the electrical switching cluster system.

To achieve the foregoing objectives, the following technical solutions are used in embodiments of this application.

According to a first aspect, an electrical switching cluster system is provided. The electrical switching cluster system includes a plurality of input nodes, a plurality of intermediate nodes, and a plurality of output nodes. Each input node is coupled to each intermediate node through an optical fiber, and each intermediate node is coupled to each output node through an optical fiber. The input node includes a first electrical switching module and a plurality of colored optics sending modules, the first electrical switching module is configured to: perform electrical switching on a plurality of input electrical signals to obtain a plurality of different groups of first electrical signals, and output one group of first electrical signals to each colored optics sending module, and each colored optics sending module is configured to: convert the group of input first electrical signals into a multi-wavelength first optical signal, and output the multi-wavelength first optical signal to one intermediate node. The intermediate node is configured to demultiplex a plurality of first optical signals input by a plurality of input ports to obtain a plurality of groups of second optical signals, where a first optical signal input by one input port is demultiplexed to obtain one group of second optical signals, and the intermediate node is further configured to: multiplex optical signals of different wavelengths in the plurality of groups of second optical signals, to obtain a plurality of multi-wavelength third optical signals, and output the plurality of multi-wavelength third optical signals to the plurality of output nodes, where one third optical signal is output to one output node. The output node includes a second electrical switching module and a plurality of colored optics receiving modules, each colored optics receiving module is configured to: convert the third optical signal input by one input port into one group of second electrical signals, and output the group of second electrical signals to the second electrical switching module, and the second electrical switching module is configured to perform electrical switching on a plurality of groups of second electrical signals from the plurality of colored optics receiving modules, to output the plurality of groups of second electrical signals through any output port.

In the electrical switching cluster system provided in this embodiment of this application, the input node converts the plurality of electrical signals into the plurality of optical signals of different wavelengths, and outputs the plurality of optical signals of different wavelengths to the one intermediate node. The intermediate node multiplexes the optical signals of different wavelengths from the plurality of input nodes, and outputs the multiplexed optical signals of different wavelengths to the one output node through one output port. The output node converts the optical signals of different wavelengths into the plurality of electrical signals, so that optical switching of the optical signal is implemented at the intermediate node without optical-to-electrical conversion and electrical-to-optical conversion. Therefore, a transmission delay of the electrical switching cluster system can be reduced.

In a possible implementation, the intermediate node includes a plurality of first wavelength division demultiplexers, a plurality of optical switching modules, and a plurality of first wavelength division multiplexers. Each first wavelength division demultiplexer is configured to: demultiplex the first optical signal input by the one input port, to obtain the group of second optical signals, and output second optical signals in the group of second optical signals to different optical switching modules. Each optical switching module is configured to output the second optical signals from different first wavelength division demultiplexers to different first wavelength division multiplexers. Each first wavelength division multiplexer is configured to: multiplex the second optical signals from the different optical switching modules, to obtain the third optical signal, and output the third optical signal to one output node.

In other words, each first wavelength division demultiplexer can demultiplex the multi-wavelength first optical signal input by the one input port of the intermediate node, to obtain the group of second optical signals of different wavelengths, and output the group of second optical signals of different wavelengths from the output port of the first wavelength division demultiplexer. Each output port of the first wavelength division demultiplexer outputs a second optical signal of one wavelength. The optical switching module can output the optical signal input by any input port to any output port. Each first wavelength division multiplexer can multiplex the second optical signals that are of different wavelengths and that are output by the optical switching module, to obtain the multi-wavelength third electrical signal, and output the multi-wavelength third electrical signal to the one output node through one output port. In other words, the optical signals that are of different wavelengths and that are input from the plurality of input ports of the first wavelength division multiplexer may be multiplexed to obtain the multi-wavelength third optical signal, and the multi-wavelength third optical signal is output from the one output port of the first wavelength division multiplexer.

In a possible implementation, the intermediate node is a wavelength selective switch, and the wavelength selective switch includes a first grating, a first spatial light modulator, a second spatial light modulator, and a second grating. The first grating is configured to spatially expand optical signals of different wavelengths in the plurality of first optical signals input by the plurality of input ports to obtain the plurality of groups of second optical signals, where optical signals of different wavelengths in the first optical signal input by the one input port are spatially expanded to obtain the group of second optical signals. The first spatial light modulator is configured to perform first modulation on the plurality of groups of spatially expanded second optical signals. The second spatial light modulator is configured to perform second modulation on the plurality of groups of first-modulated second optical signals. The second grating is configured to: combine second optical signals of different wavelengths in the plurality of groups of second-modulated second optical signals, to obtain the plurality of third optical signals, and output the plurality of third optical signals to the plurality of output nodes.

In other words, on the premise that the wavelengths do not conflict (or referred to as different wavelengths), the wavelength selective switch may output, to any output port, an optical signal that is of any wavelength and that is input by any input port, and spatial light modulation may further adjust a wavelength spacing. In this way, total bandwidth of the optical signals of different wavelengths supported by the system is adjusted, which may be applicable to a scenario in which a capacity of the electrical switching cluster system is expanded or a scenario in which a used electrical transmission protocol evolves.

In a possible implementation, the colored optics sending module includes a plurality of cascaded first microrings, resonance wavelengths of the first microrings are different, and each first microring is configured to modulate laser light of one wavelength in multi-wavelength first laser light based on one first electrical signal in the group of first electrical signals, to obtain an optical signal of one wavelength in the first optical signal.

In other words, each microring corresponds to one wavelength, and the multi-wavelength first laser light sequentially enters each microring. When an electrical signal used for modulation is loaded onto one microring, the microring modulates laser light of a corresponding wavelength, to obtain an optical signal of the wavelength. The microring does not modulate laser light of another wavelength, so that the laser light of another wavelength can directly enter a next-level microring. In this way, the colored optics sending module can modulate, without optical splitting, laser light of each wavelength in the multi-wavelength first laser light based on the electrical signal, and can directly output the multi-wavelength first optical signal without performing multiplexing after the modulation.

In a possible implementation, the input node further includes a plurality of multi-wavelength light sources, each multi-wavelength light source is coupled to the plurality of first microrings in one colored optics sending module through an optical fiber, and each multi-wavelength light source is configured to output the multi-wavelength first laser light to one colored optics sending module.

In other words, the multi-wavelength first laser light can be output by using one light source, thereby reducing hardware costs.

In a possible implementation, the input node or the intermediate node further includes a multi-wavelength light source and a first optical splitter, the multi-wavelength light source is configured to output multi-wavelength second laser light, and the first optical splitter is configured to perform optical splitting on the multi-wavelength second laser light based on optical power to obtain the multi-wavelength first laser light.

In other words, when the multi-wavelength light source and the first optical splitting device are located at the input node, different groups of multi-wavelength first laser light may be output to different colored optics sending modules of the input node. When the multi-wavelength light source and the first optical splitting device are located at the intermediate node, different groups of multi-wavelength first laser light may be output to different colored optics sending modules in a same input node, or output to colored optics sending modules in different input nodes. In this implementation, a plurality of colored optics sending modules share a same light source, so that a probability that a light source fails is greatly reduced, system reliability is improved, and costs can be reduced. In addition, when the multi-wavelength light source and the first optical splitting device are located at the intermediate node, a case in which a failure of a light source of an input node affects normal operation of the input node can be prevented.

The first optical splitting device may alternatively be a wavelength division demultiplexer. Compared with the manner in which the optical splitter is configured to perform the optical splitting, an insertion loss of a manner in which the wavelength division demultiplexer is configured to perform the optical splitting is lower, and a requirement on output optical power of the light source is lower, so that reliability of the light source can be effectively improved and costs of the light source can be reduced.

In a possible implementation, the input node further includes an optical combiner, and the optical combiner is configured to: multiplex the plurality of first optical signals output by the plurality of colored optics sending modules, and output the multiplexed first optical signals to one intermediate node.

In this way, a quantity of optical signals transmitted through a single optical fiber between the input node and the intermediate node can be increased, thereby reducing a quantity of optical fibers between the input node and the intermediate node, reducing engineering optical fiber layout difficulty, and supporting a larger capacity. In addition, a quantity of ports of the input node and the intermediate node can be further simplified, and manufacturing difficulty of the input node and the intermediate node can be reduced.

In a possible implementation, the colored optics receiving module includes a plurality of cascaded second microrings, an input end of the output node is coupled to the plurality of second microrings in one colored optics receiving module through an optical fiber, resonance wavelengths of the second microrings are different, and each second microring is configured to demodulate an optical signal of one wavelength in the third optical signal received by the colored optics receiving module to obtain one electrical signal.

In other words, each second microring demodulates laser light of a corresponding wavelength, to obtain a corresponding electrical signal, and each second microring does not demodulate laser light of another wavelength, so that the laser light of another wavelength can directly enter a next-level microring. A plurality of electrical signals may be obtained by demodulating a multi-wavelength optical signal without performing optical splitting.

In a possible implementation, the output node further includes a second optical splitter, and the second optical splitter is configured to: perform optical splitting on the third optical signal input by the one input port and respectively output the split third optical signals to the plurality of colored optics receiving modules.

For technical effect of the second optical splitter, refer to the technical effect of the optical combiner in the input node. Details are not repeated herein.

### BRIEF DESCRIPTION OF DRAWINGS

FIG. 1 is a schematic diagram 1 of a structure of an electrical switching cluster system according to an embodiment of this application;
FIG. 2 is a schematic diagram 2 of a structure of an electrical switching cluster system according to an embodiment of this application;
FIG. 3 is a schematic diagram 3 of a structure of an electrical switching cluster system according to an embodiment of this application;
FIG. 4 is a schematic diagram 4 of a structure of an electrical switching cluster system according to an embodiment of this application;
FIG. 5 is a schematic diagram 5 of a structure of an electrical switching cluster system according to an embodiment of this application;
FIG. 6 is a schematic diagram 6 of a structure of an electrical switching cluster system according to an embodiment of this application;
FIG. 7 is a schematic diagram 7 of a structure of an electrical switching cluster system according to an embodiment of this application; and
FIG. 8 is a schematic diagram 8 of a structure of an electrical switching cluster system according to an embodiment of this application.

### DESCRIPTION OF EMBODIMENTS

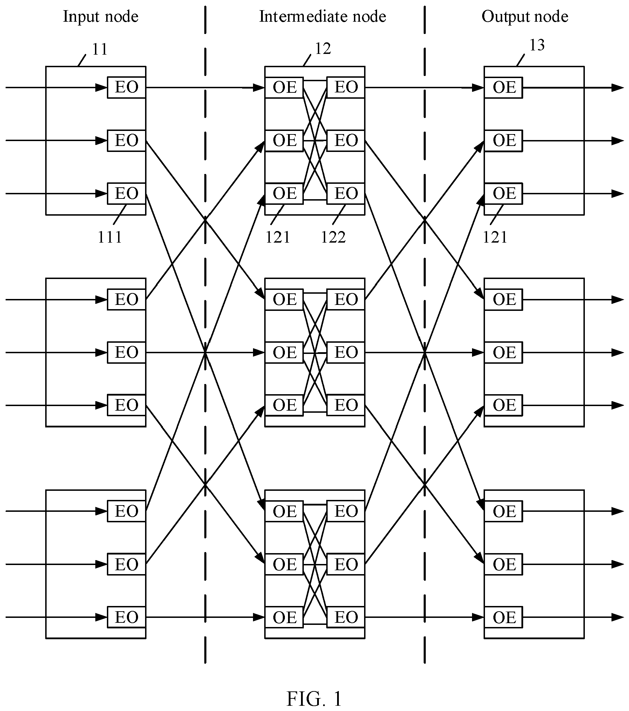

In a large-bandwidth optical fiber transmission network, small-capacity electrical switches are connected through optical fibers in a specific network topology, to form a large-capacity electrical switching cluster system. As shown in FIG. 1, an electrical switching cluster system using a three-level Clos architecture includes a plurality of input nodes 11, a plurality of intermediate nodes 12, and a plurality of output nodes 13, and each node is an electrical switch. A quantity of input nodes 11 and a quantity of output nodes 13 may be the same, for example, both may be m, and a quantity of intermediate nodes 12 may be n. Each input node 11 is coupled to each intermediate node 12 through an optical fiber to transmit an optical signal, and each intermediate node 12 is coupled to each output node 13 through an optical fiber to transmit an optical signal. m and n are positive integers.

The input node 11 includes a plurality of input ports (not shown in the figure), a plurality of output ports (not shown in the figure), and a plurality of first electrical-to-optical conversion (electrical-to-optical conversion, EO) modules 111. An input port of each first EO module 111 is an input port of the input node 11, and an output port of each first EO module 111 is an output port of the input node 11. A quantity of first EO modules 111 in the input node 11, a quantity of input ports of the input node 11, and a quantity of output ports of the input node 11 are the same, for example, all may be n.

The intermediate node 12 includes a plurality of input ports (not shown in the figure), a plurality of output ports (not shown in the figure), a plurality of first optical-to-electrical conversion (optical-to-electrical conversion, OE) modules 121, and a plurality of second EO modules 122. An input port of each first OE module 121 is an input port of the intermediate node 12, and an output port of each second EO module 122 is an output port of the intermediate node 12. A coupling manner between output ports of the plurality of first OE modules and input ports of the plurality of second EO modules 122 is electrical coupling (that is, electrical signals are transmitted between each other). A quantity of first OE modules 121, a quantity of second EO modules 122, a quantity of input ports of the intermediate node 12, and a quantity of output ports of the intermediate node 12 in the intermediate node 12 may be the same, for example, all may be m.

The output node 13 includes a plurality of input ports (not shown in the figure), a plurality of output ports (not shown in the figure), and a plurality of second OE modules 131. An input port of each second OE module 131 is an input port of the output node 13, and an output port of each second OE module 131 is an output port of the output node 13. A quantity of second OE modules 131, a quantity of input ports of the output node 13, and a quantity of output ports of the output node 13 may be the same, for example, all may be n.

The following describes a working principle of the electrical switching cluster system.

After inputting an electrical signal through an input port, the input node 11 converts the electrical signal into an optical signal by using the first EO module 111, and sends the optical signal to the intermediate node 12 through an output port. The intermediate node 12 converts the optical signal into an electrical signal by using the first OE module 121, may output the electrical signal to any second EO module 122, converts the electrical signal into an optical signal by using the second EO module 122, and sends the optical signal to the output node 13 through an output port. The output node 13 converts the optical signal into an electrical signal by using the second OE module 131, and outputs the electrical signal through the output port. In this way, by using the three-level electrical switch, the electrical signal input from any input port of the input node 11 may be switched by the intermediate node to any output port of any output node 13.

However, as a capacity of the electrical switching cluster system increases, power consumption increases rapidly, and a power supply capability of an equipment room is limited, which restricts further expansion of the capacity. In addition, the intermediate node needs to perform optical-to-electrical conversion and electrical-to-optical conversion in sequence, which increases a transmission delay. As the capacity expands, more intermediate nodes may be required, which further increases the transmission delay. In addition, an electrical transmission protocol used by the intermediate node is fixed. When the capacity of the electrical switching cluster system is expanded or the used electrical transmission protocol evolves, the input node and the output node that use different electrical transmission protocols cannot communicate by using a same intermediate node. For example, an existing electrical switching cluster system is an optical transport network (optical transport network, OTN) cluster system, and after capacity expansion, an internet protocol (internet protocol, IP) cluster system is newly connected. In this case, the two cluster systems cannot share an intermediate node. Therefore, the two cluster systems cannot be integrated.

In view of this, embodiments of this application provide an electrical switching cluster system. An intermediate node does not perform optical-to-electrical conversion and electrical-to-optical conversion, but switches an optical signal to implement data exchange between any input port and any output port of the intermediate node. This can reduce system power consumption, and can further reduce a transmission delay of the intermediate node. In addition, decoupling from an electrical transmission protocol is further implemented, so that an input node and an output node that use different electrical transmission protocols can communicate with each other by using the intermediate node.

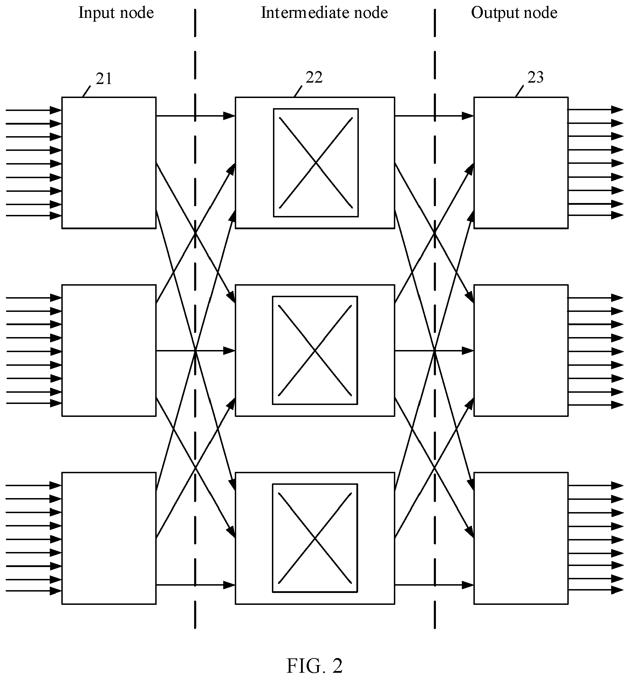

As shown in FIG. 2, an embodiment of this application provides an electrical switching cluster system, including a plurality of input nodes 21, a plurality of intermediate nodes 22, and a plurality of output nodes 23. Each input node 21 is coupled to each intermediate node 22 through an optical fiber to transmit an optical signal. Each intermediate node 22 is coupled to each output node 23 through an optical fiber to transmit an optical signal.

The input node 21, the intermediate node 22, and the output node 23 have the following functions: The input node 21 performs electrical switching on a plurality of electrical signals input from different input ports to obtain a plurality of first electrical signals, performs electrical-to-optical conversion on the plurality of first electrical signals to obtain a multi-wavelength first optical signal, and outputs the multi-wavelength first optical signal to an intermediate node of the plurality of intermediate nodes. The multi-wavelength first optical signal includes optical signals of different wavelengths, and the optical signal of each wavelength is obtained by converting one first electrical signal. The intermediate node 22 demultiplexes a plurality of multi-wavelength first optical signals input by a plurality of input ports to obtain a plurality of groups of second optical signals. The multi-wavelength first optical signal input by one input port is demultiplexed to obtain one group of second optical signals of different wavelengths. The intermediate node 22 may further multiplex optical signals of different wavelengths in the plurality of groups of second optical signals from different input ports, to obtain a plurality of multi-wavelength third optical signals, and output the plurality of multi-wavelength third optical signals to the output node 23. Specifically, one third optical signal is output to one output node 23 through one output port, and the plurality of third optical signals are output to the plurality of output nodes 23 through a plurality of output ports. The output node 23 performs optical-to-electrical conversion on each multi-wavelength third optical signal to obtain a plurality of second electrical signals, and outputs the second electrical signals from the plurality of output ports after the electrical switching is performed on the second electrical signals. Each second electrical signal is obtained from an optical signal of one wavelength in the third optical signal.

It should be noted that the input node 21 may convert different electrical signals into optical signals of different wavelengths, where information about the different electrical signals is carried by using the optical signals of different wavelengths, and multiplex the optical signals of different wavelengths into the multi-wavelength first optical signal. In addition, different first optical signals output by the plurality of input nodes 21 to a same intermediate node 22 cannot include optical signals of a same wavelength. Otherwise, two optical signals of a same wavelength are mixed into an optical signal of a same wavelength, and information originally carried in the two optical signals is mixed together and cannot be separated. The intermediate node 22 may output the optical signals that are of different wavelengths and that are input from the different input ports to different output ports, and wavelengths of different optical signals output to a same output port cannot be the same. The reason is the same as above. In other words, on the premise that the wavelengths do not conflict (or referred to as different wavelengths), the intermediate node 22 may output, to any output port, an optical signal that is of any wavelength and that is input by any input port.

In the electrical switching cluster system provided in this embodiment of this application, the input node converts the plurality of electrical signals into the plurality of optical signals of different wavelengths, and outputs the plurality of optical signals of different wavelengths to the one intermediate node. The intermediate node multiplexes the optical signals of different wavelengths from the plurality of input nodes, and outputs the multiplexed optical signals of different wavelengths to the one output node through the one output port. The output node converts the optical signals of different wavelengths into the plurality of electrical signals, so that optical switching of the optical signal is implemented at the intermediate node without the optical-to-electrical conversion and the electrical-to-optical conversion. Therefore, a transmission delay of the electrical switching cluster system can be reduced.

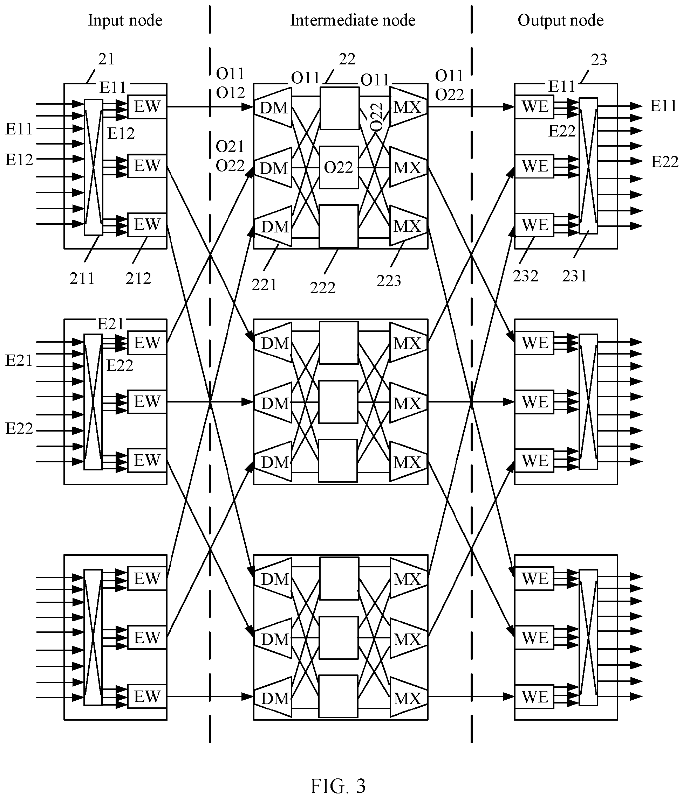

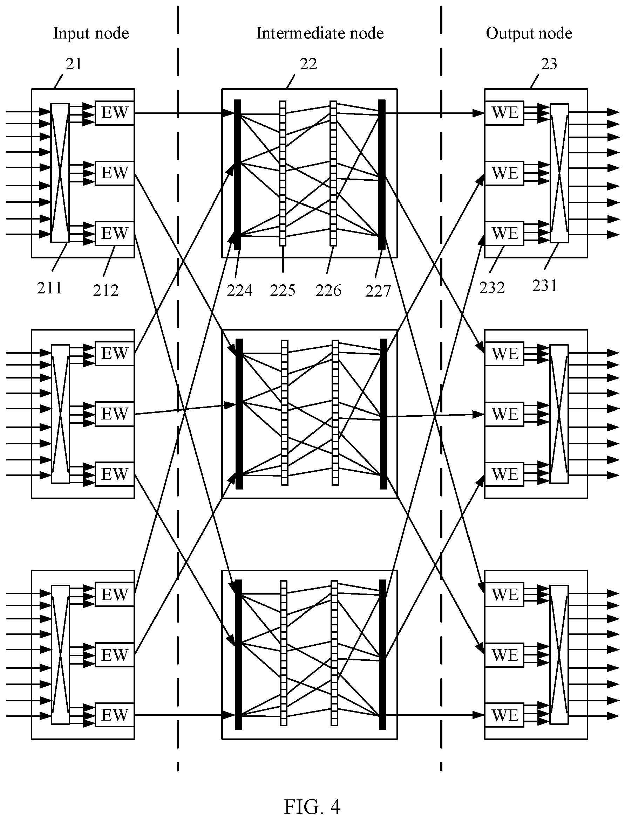

With reference to FIG. 3 and FIG. 4, the following describes possible structures of an input node 21, an intermediate node 22, and an output node 23, and functions of modules included in the input node 21, the intermediate node 22, and the output node 23.

As shown in FIG. 3 and FIG. 4, the input node 21 includes a plurality of input ports (not shown in the figure), a plurality of output ports (not shown in the figure), a first electrical switching module 211, and a plurality of colored optics sending modules 212.

The first electrical switching module 211 includes a plurality of input ports and a plurality of output ports, and a quantity of input ports and a quantity of output ports of the first electrical switching module 211 are the same. The colored optics sending module 212 includes a plurality of input ports and one output port. The plurality of input ports of the first electrical switching module 211 are the plurality of input ports of the input node 21, and the plurality of output ports of the first electrical switching module 211 are respectively coupled to the plurality of input ports of the plurality of colored optics sending modules 212. The output port of the colored optics sending module 212 is one of the plurality of output ports of the input node 21.

The input port of the input node 21 is configured to input a first electrical signal, and first electrical signals input by the input ports are different. The first electrical switching module 211 is configured to: perform electrical switching on a plurality of electrical signals input by the input ports to obtain a plurality of different groups of first electrical signals, and output one group of first electrical signals to each colored optics sending module 212, and each colored optics sending module 212 is configured to: convert the group of input first electrical signals into a multi-wavelength first optical signal, and output the multi-wavelength first optical signal to one intermediate node 22. The optical signal of each wavelength in the first optical signal is obtained by performing electrical-to-optical conversion on one of the plurality of first electrical signals. The plurality of colored optics sending modules 212 are configured to output a plurality of first optical signals to the plurality of intermediate nodes 22, and the colored optics sending module 212 may be referred to as an electrical signal wavelength division multiplexing signal converter (electric to WDM convertor, EW) 212 in the accompanying drawing.

As shown in FIG. 3 and FIG. 4, the intermediate node may include two implementations.

As shown in FIG. 3, in a possible implementation, the intermediate node 22 includes a plurality of input ports (not shown in the figure), a plurality of output ports (not shown in the figure), a plurality of first wavelength division demultiplexers (demultiplexer, DM) 221, a plurality of optical switching modules 222, and a plurality of first wavelength division multiplexers (multiplexer, MX) 223. Each first wavelength division demultiplexer 221 is coupled to each optical switching module 222 through an optical fiber. Each optical switching module 222 is coupled to each first wavelength division multiplexer 223 through an optical fiber.

The first wavelength division demultiplexer 221 includes one input port and a plurality of output ports, the input port of the first wavelength division demultiplexer 223 is one of the plurality of input ports of the intermediate node 22, and a quantity of output ports of the first wavelength division demultiplexer 221 is greater than or equal to a quantity of wavelengths of optical signals transmitted in the system. Each first wavelength division demultiplexer 221 can demultiplex the multi-wavelength first optical signal input by the one input port of the intermediate node 22, to obtain one group of second optical signals of different wavelengths, and output the group of second optical signals of different wavelengths from the output port of the first wavelength division demultiplexer 221. Each output port of the first wavelength division demultiplexer 221 outputs a second optical signal of one wavelength, to output second optical signals in the group of second optical signals to different optical switching modules 222.

The optical switching module 222 includes a plurality of input ports and a plurality of output ports. Each optical switching module 222 can output second optical signals of different wavelengths from different first wavelength division demultiplexers 221 to different first wavelength division demultiplexers 223. In other words, second optical signals of different wavelengths in a plurality of groups of second optical signals obtained from the plurality of first optical signals are output to any first wavelength division multiplexer 223, so that the optical signal input from any input port of the optical switching module 222 can be output to any output port of the optical switching module 222.

The first wavelength division multiplexer 223 includes a plurality of input ports and one output port. The output port of the first wavelength division multiplexer 223 is one of the plurality of output ports of the intermediate node 22. Each first wavelength division multiplexer 223 can multiplex the second optical signals that are of different wavelengths and that are from the different optical switching modules 222, to obtain a multi-wavelength third electrical signal, and output the multi-wavelength third electrical signal to the one output node 23 through the one output port. In other words, the optical signals that are of different wavelengths and that are input from the plurality of input ports of the first wavelength division multiplexer 223 may be multiplexed to obtain the multi-wavelength third optical signal, and the multi-wavelength third optical signal is output from the one output port of the first wavelength division multiplexer 223.

As shown in FIG. 4, in another possible implementation, the intermediate node 22 may be a wavelength selective switch (wavelength selective switch, WSS). The wavelength selective switch includes a plurality of input ports (not shown in the figure), a plurality of output ports (not shown in the figure), a first grating 224, a first spatial light modulator 225, a second spatial light modulator 226, and a second grating 227.

A multi-wavelength first optical signal input from one input port of the intermediate node 22 is transmitted in space to the first grating 224, and the first grating 224 may spatially expand optical signals of different wavelengths in the first optical signal input by the one input port to obtain one group of second optical signals of different wavelengths. In this case, optical signals of different wavelengths in a plurality of first optical signals input by the plurality of input ports are spatially expanded to obtain a plurality of groups of second optical signals. The first spatial light modulator 225 performs first modulation (for example, reflection or diffraction) on the plurality of groups of spatially expanded second optical signals of different wavelengths, to adjust an angle of emergence of the second optical signals of different wavelengths. The second spatial light modulator 226 performs second modulation (for example, reflection or diffraction) on the plurality of groups of first-modulated second optical signals of different wavelengths, to further adjust the angle of emergence of the second optical signals of different wavelengths. The second grating 227 combines the plurality of groups of second-modulated second optical signals of different wavelengths, to obtain a plurality of multi-wavelength third optical signals. One third optical signal output by the second grating 227 is transmitted in space to one of the plurality of output ports, to be output to one output node 23. The plurality of third optical signals may be output to the plurality of output nodes 23 through the plurality of output ports. This application may further include more spatial light modulators, so that second optical signals of different wavelengths are modulated for more times. A reason why the second optical signals of different wavelengths need to be modulated for at least twice is that it is difficult to adjust the angle of emergence of the second optical signals through a single modulation.

On the premise that the wavelengths do not conflict (or referred to as different wavelengths), the wavelength selective switch may output, to any output port, an optical signal that is of any wavelength and that is input by any input port, and spatial light modulation may further adjust a wavelength spacing. In this way, total bandwidth of the optical signals of different wavelengths supported by the system is adjusted, which may be applicable to a scenario in which a capacity of the electrical switching cluster system is expanded or a scenario in which a used electrical transmission protocol evolves.

As shown in FIG. 3 and FIG. 4, the output node 23 includes a plurality of input ports (not shown in the figure), a plurality of output ports (not shown in the figure), a second electrical switching module 231, and a plurality of colored optics receiving modules 232.

The colored optics receiving module 232 includes one input port and a plurality of output ports, the second electrical switching module 231 includes a plurality of input ports and a plurality of output ports. The input port of the colored optics receiving module 232 is one input port of the output node 23, the plurality of output ports of the plurality of colored optics receiving modules 232 are respectively coupled to the plurality of input ports of the second electrical switching module 231, and one output port of the second electrical switching module 231 is one output port of the output node 23.

The input port of the output node 23 is configured to input the third optical signal, and third optical signals input by the input ports are different. Each colored optics receiving module 232 is configured to: convert the multi-wavelength third optical signal input by the one input port into one group of second electrical signals, and output the group of second electrical signals to the second electrical switching module 231, and the second electrical switching module 231 is configured to perform electrical switching on the plurality of groups of second electrical signals from the plurality of colored optics receiving modules 232, to output the plurality of groups of second electrical signals through any different output ports of the output node 23. The colored optics receiving module 232 may be referred to as a wavelength division multiplexing signal electrical signal converter (WDM to electric convertor, WE) 232 in the accompanying drawing.

The following uses FIG. 3 as an example to describe how the system implements electrical signal switching.

For example, it is assumed that a first electrical signal E11 and a first electrical signal E12 are separately input to two input ports of a first input node, and a first electrical signal E21 and a first electrical signal E22 are separately input to two input ports of a second input node. A first electrical switching module of the first input node outputs the first electrical signal E11 and the first electrical signal E12 to a colored optics sending module of the first input node, and the colored optics sending module converts the first electrical signal E11 into an optical signal O11, converts the first electrical signal E12 into an optical signal O12, multiplexes the two optical signals into a first optical signal (Oil O12), and outputs the first optical signal (Oil O12) to a 1^{st} first wavelength division demultiplexer of a 1^{st} intermediate node. Similarly, a first electrical switching module of the second input node outputs the first electrical signal E21 and the first electrical signal E22 to a colored optics sending module of the second input node, and the colored optics sending module converts the first electrical signal E21 into an optical signal 021, converts the first electrical signal E22 into an optical signal O22, multiplexes the two optical signals into a first optical signal (O21 O22), and outputs the first optical signal (O21 O22) to a 2^{nd} first wavelength division demultiplexer of the 1^{st} intermediate node.

The 1^{st} first wavelength division demultiplexer of the 1^{st} intermediate node demultiplexes the first optical signal (Oil O12) into a second optical signal O11 and a second optical signal O12 (not shown in the figure), and outputs the second optical signal O11 to a first optical switching module of the 1^{st} intermediate node. The optical switching module outputs the second optical signal O11 to a 1^{st} first wavelength division multiplexer of the intermediate node. The 2^{nd} first wavelength division demultiplexer of the intermediate node demultiplexes the first optical signal (O21 O22) into a second optical signal O21 (not shown in the figure) and a second optical signal O22, and outputs the second optical signal O22 to a second optical switching module of the intermediate node. The optical switching module outputs the second optical signal O22 to the 1^{st} first wavelength division multiplexer of the intermediate node. The 1^{st} first wavelength division multiplexer multiplexes the second optical signal O11 and the second optical signal O22 to obtain a third optical signal (Oil O22), and outputs the third optical signal (Oil O22) to a first colored optics receiving module of an output node.

The first colored optics receiving module of the output node converts the optical signal O11 into a second electrical signal E11, converts the optical signal O22 into a second electrical signal E22, and outputs the second electrical signal E11 and the second electrical signal E22 to a second electrical switching module of the output node. The second electrical switching module outputs the second electrical signal E11 and the second electrical signal E22 through different output ports.

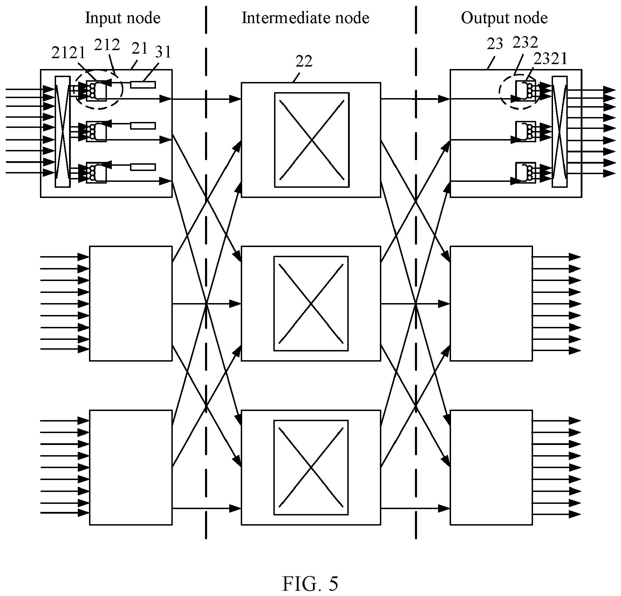

The following describes possible structures of a colored optics sending module of an input node and a colored optics receiving module of an output node with reference to FIG. 5 to FIG. 8. It should be noted that structures of the input node and the output node in FIG. 5 to FIG. 8 may be combined with the structure of the intermediate node in FIG. 3 or FIG. 4.

As shown in FIG. 5 to FIG. 8, a colored optics sending module 212 of an input node 21 includes a plurality of cascaded first microrings (which may also be referred to as a microring modulator array) 2121, resonance wavelengths of the first microrings 2121 are different, and each first microring 2121 is configured to modulate laser light of one wavelength in multi-wavelength first laser light based on one electrical signal in one group of first electrical signals, to obtain an optical signal of one wavelength in a multi-wavelength first optical signal. In other words, each microring corresponds to one wavelength, and the multi-wavelength first laser light sequentially enters each microring. When an electrical signal used for modulation is loaded onto one microring, the microring modulates laser light of a corresponding wavelength, to obtain an optical signal of the wavelength. The microring does not modulate laser light of another wavelength, so that the laser light of another wavelength can directly enter a next-level microring. In this way, the colored optics sending module 212 can modulate, without optical splitting, laser light of each wavelength in the multi-wavelength first laser light based on the electrical signal, and can directly output the multi-wavelength first optical signal without performing multiplexing after the modulation.

A light source that generates the multi-wavelength first laser light may have a plurality of implementations.

In a possible implementation, as shown in FIG. 5, the input node 21 may further include a plurality of multi-wavelength light sources 31, each multi-wavelength light source 31 is coupled to the plurality of first microrings 2121 in one colored optics sending module 212 through an optical fiber, and each multi-wavelength light source 31 is configured to output the multi-wavelength first laser light to one colored optics sending module 212. That is, each first microring corresponds to one multi-wavelength light source.

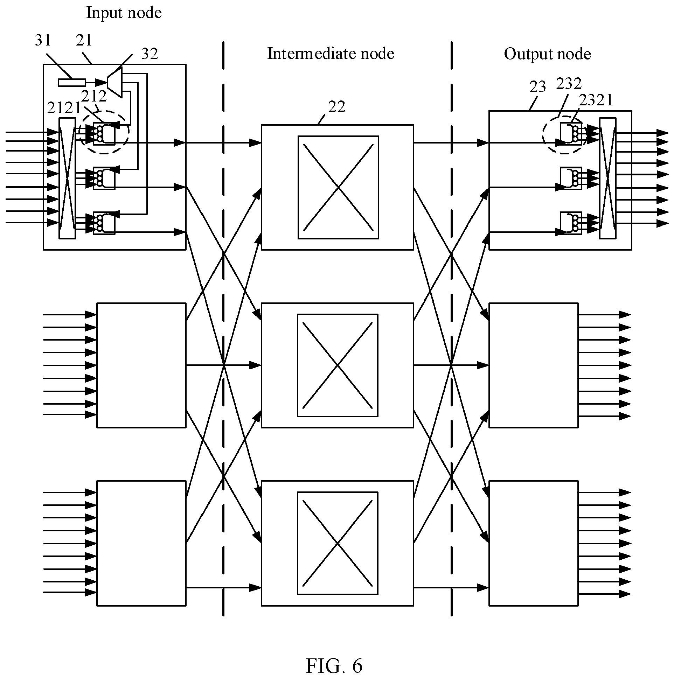

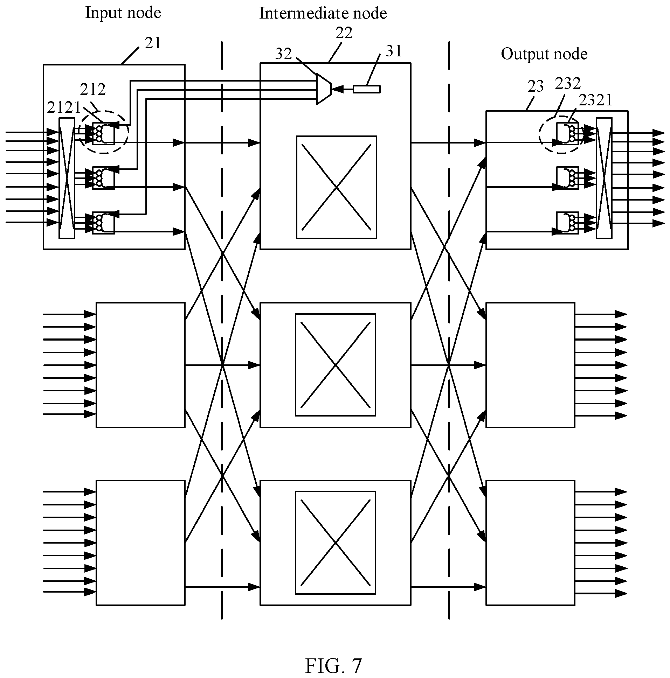

In another possible implementation, as shown in FIG. 6, the input node 21 may further include a multi-wavelength light source 31 and a first optical splitting device 32. Alternatively, as shown in FIG. 7, an intermediate node 22 may further include a multi-wavelength light source 31 and a first optical splitting device 32. The multi-wavelength light source 31 is configured to output multi-wavelength second laser light, and the first optical splitting device 32 is configured to perform optical splitting on the multi-wavelength second laser light to obtain a plurality of groups of multi-wavelength first laser light. The multi-wavelength first laser light is a subset of the multi-wavelength second laser light. For example, it is assumed that the multi-wavelength light source 31 generates second laser light of nine wavelengths, and the first optical splitting device 32 may use laser light of every three wavelengths as one group of multi-wavelength first laser light.

The first optical splitting device 32 may be a first optical splitter or a second wavelength division demultiplexer. The first optical splitter is configured to perform the optical splitting on the multi-wavelength second laser light to obtain the plurality of groups of multi-wavelength first laser light. The second wavelength division demultiplexer is configured to demultiplex the multi-wavelength second laser light to obtain the plurality of groups of multi-wavelength first laser light. Compared with the manner in which the optical splitter is configured to perform the optical splitting, an insertion loss of a manner in which the wavelength division demultiplexer is configured to perform the optical splitting is lower, and a requirement on output optical power of the light source is lower, so that reliability of the light source can be effectively improved and costs of the light source can be reduced.

When the multi-wavelength light source 31 and the first optical splitting device 32 are located at the input node 21, different groups of multi-wavelength first laser light may be output to different colored optics sending modules 212 of the input node 21. When the multi-wavelength light source 31 and the first optical splitting device 32 are located at the intermediate node 22, different groups of multi-wavelength first laser light may be output to different colored optics sending modules 212 in a same input node 21, or output to colored optics sending modules 212 in different input nodes 21 (this scenario is not shown in the figure). In this implementation, a plurality of colored optics sending modules 212 share a same light source, so that a probability that a light source fails is greatly reduced, system reliability is improved, and costs can be reduced. In addition, when the multi-wavelength light source 31 and the first optical splitting device 32 are located at the intermediate node 22, a case in which a failure of a light source of an input node 21 affects normal operation of the input node 21 can be prevented.

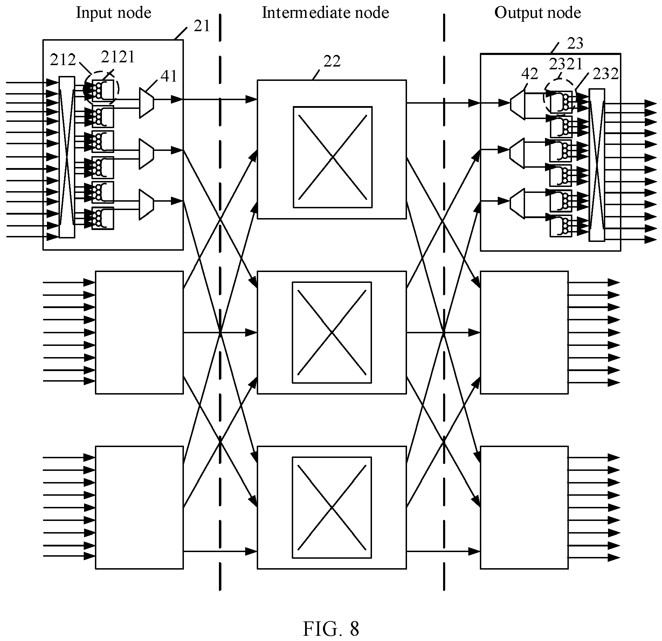

As shown in FIG. 8, the input node 21 may further include an optical combining device 41, and the optical combining device 41 is configured to: multiplex a plurality of multi-wavelength first optical signals output by the plurality of colored optics sending modules 212, and output the multiplexed multi-wavelength first optical signals to one intermediate node 22. The optical combining device 41 may be an optical combiner or a wavelength division multiplexer. It should be noted that one input node 21 may include the optical combining device 41, or a plurality of input nodes 21 may include the optical combining device 41.

In this way, a quantity of optical signals transmitted through a single optical fiber between the input node 21 and the intermediate node can be increased, thereby reducing a quantity of optical fibers between the input node 21 and the intermediate node 22, reducing engineering optical fiber layout difficulty, and supporting a larger capacity. In addition, a quantity of ports of the input node 21 and the intermediate node 22 can be further simplified, and manufacturing difficulty of the input node 21 and the intermediate node 22 can be reduced.

It should be noted that the light source for outputting the laser light is not shown in FIG. 8, and the light source shown in any implementation of FIG. 5 to FIG. 7 may be used in FIG. 8.

As shown in FIG. 5 to FIG. 8, a colored optics receiving module 232 includes a plurality of cascaded second microrings (which may also be referred to as a microring receiver array) 2321, an input end of an output node 23 is coupled to the second microrings 2321 in one colored optics receiving module 232 through an optical fiber, resonance wavelengths of the second microrings 2321 are different, and each second microring 2321 is configured to demodulate an optical signal that is of one wavelength in a third optical signal and that is received by the colored optics receiving module 232 to obtain one electrical signal.

Each second microring 2321 demodulates laser light of a corresponding wavelength, to obtain a corresponding electrical signal, and each second microring does not demodulate laser light of another wavelength, so that the laser light of another wavelength can directly enter a next-level microring. A plurality of electrical signals may be obtained by demodulating the multi-wavelength optical signal without performing the optical splitting.

As shown in FIG. 8, the output node 23 further includes a second optical splitting device 42, configured to: perform optical splitting on the third optical signal input by one input port and respectively output the split third optical signals to a plurality of colored optics receiving modules 232. The second optical splitting device 42 may be an optical splitter or a wavelength division demultiplexer. For technical effect of the second optical splitting device 42, refer to the technical effect of the optical combining device 41 in the input node 21. Details are not repeated herein.

In the several embodiments provided in this application, it should be understood that the disclosed system and device may be implemented in other manners. For example, the described device embodiment is merely an example. For example, division into the modules is merely logical function division and may be other division in an actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate components may or may not be physically separate, and components displayed as units may or may not be physical modules, may be located in one device, or may be distributed on a plurality of devices. Some or all of the modules may be selected based on actual requirements to achieve the objectives of the solutions of embodiments.

In addition, functional modules in this application may be integrated into one module, each of the modules may exist alone physically, or two or more modules are integrated into one module.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electrical switching cluster system, comprising: a plurality of input nodes, a plurality of intermediate nodes, and a plurality of output nodes, wherein each input node is coupled to each intermediate node through an optical fiber, and each intermediate node is coupled to each output node through an optical fiber;
the input node comprises a first electrical switching module and a plurality of colored optics sending modules, the first electrical switching module is configured to: perform electrical switching on a plurality of input electrical signals to obtain a plurality of different groups of first electrical signals, and output one group of first electrical signals to each colored optics sending module, and each colored optics sending module is configured to: convert the group of input first electrical signals into a multi-wavelength first optical signal, and output the multi-wavelength first optical signal to one intermediate node;
the intermediate node is configured to demultiplex a plurality of first optical signals input by a plurality of input ports to obtain a plurality of groups of second optical signals, wherein a first optical signal input by one input port is demultiplexed to obtain one group of second optical signals, and the intermediate node is further configured to: multiplex optical signals of different wavelengths in the plurality of groups of second optical signals, to obtain a plurality of multi-wavelength third optical signals, and output the plurality of multi-wavelength third optical signals to the plurality of output nodes, wherein one third optical signal is output to one output node; and
the output node comprises a second electrical switching module and a plurality of colored optics receiving modules, each colored optics receiving module is configured to: convert the third optical signal input by one input port into one group of second electrical signals, and output the group of second electrical signals to the second electrical switching module, and the second electrical switching module is configured to perform electrical switching on a plurality of groups of second electrical signals from the plurality of colored optics receiving modules, to output the plurality of groups of second electrical signals through any output port.

2. The electrical switching cluster system according to claim 1, wherein the intermediate node comprises a plurality of first wavelength division demultiplexers, a plurality of optical switching modules, and a plurality of first wavelength division multiplexers;
each first wavelength division demultiplexer is configured to: demultiplex the first optical signal input by the one input port, to obtain the group of second optical signals, and output second optical signals in the group of second optical signals to different optical switching modules;
each optical switching module is configured to output the second optical signals from different first wavelength division demultiplexers to different first wavelength division multiplexers; and
each first wavelength division multiplexer is configured to: multiplex the second optical signals from the different optical switching modules, to obtain the third optical signal, and output the third optical signal to one output node.

3. The electrical switching cluster system according to claim 1, wherein the intermediate node is a wavelength selective switch, and the wavelength selective switch comprises a first grating, a first spatial light modulator, a second spatial light modulator, and a second grating;
the first grating is configured to spatially expand optical signals that are of different wavelengths in the plurality of first optical signals and that are input by the plurality of input ports to obtain the plurality of groups of second optical signals, wherein optical signals that are of different wavelengths in the first optical signal and that are input by the one input port are spatially expanded to obtain the group of second optical signals;
the first spatial light modulator is configured to perform first modulation on the plurality of groups of spatially expanded second optical signals;
the second spatial light modulator is configured to perform second modulation on the plurality of groups of first-modulated second optical signals; and
the second grating is configured to: combine second optical signals of different wavelengths in the plurality of groups of second-modulated second optical signals, to obtain the plurality of third optical signals, and output the plurality of third optical signals to the plurality of output nodes.

4. The electrical switching cluster system according to any one of claims 1 to 3, wherein the colored optics sending module comprises a plurality of cascaded first microrings, resonance wavelengths of the first microrings are different, and each first microring is configured to modulate laser light of one wavelength in multi-wavelength first laser light based on one first electrical signal in the group of first electrical signals, to obtain an optical signal of one wavelength in the first optical signal.

5. The electrical switching cluster system according to claim 4, wherein the input node further comprises a plurality of multi-wavelength light sources, each multi-wavelength light source is coupled to the plurality of first microrings in one colored optics sending module through an optical fiber, and each multi-wavelength light source is configured to output the multi-wavelength first laser light to one colored optics sending module.

6. The electrical switching cluster system according to claim 4, wherein the input node or the intermediate node further comprises a multi-wavelength light source and a first optical splitter, the multi-wavelength light source is configured to output multi-wavelength second laser light, and the first optical splitter is configured to perform optical splitting on the multi-wavelength second laser light based on optical power to obtain the multi-wavelength first laser light.

7. The electrical switching cluster system according to any one of claims 1 to 6, wherein the input node further comprises an optical combiner, and the optical combiner is configured to: multiplex the plurality of first optical signals output by the plurality of colored optics sending modules, and output the multiplexed first optical signals to one intermediate node.

8. The electrical switching cluster system according to any one of claims 1 to 7, wherein the colored optics receiving module comprises a plurality of cascaded second microrings, an input end of the output node is coupled to the plurality of second microrings in one colored optics receiving module through an optical fiber, resonance wavelengths of the second microrings are different, and each second microring is configured to demodulate an optical signal of one wavelength in the third optical signal received by the colored optics receiving module to obtain one electric signal.

9. The electrical switching cluster system according to any one of claims 1 to 8, wherein the output node further comprises a second optical splitter, and the second optical splitter is configured to: perform optical splitting on the third optical signal input by the one input port and respectively output the split third optical signals to the plurality of colored optics receiving modules.
